# EUROPÄISCHE PATENTANMELDUNG

(11) **EP 0 711 645 A1**
(43) Veröffentlichungstag der Anmeldung: **15.05.1996**
(21) Anmeldenummer: 95117417.6
(22) Anmeldetag: 06.11.1995
(51) Int. Cl.: B29C 45/14, B29C 44/12

(54) **Verfahren zum Beschriften von bzw. Aufbringen eines Logos auf Kunststoffartikeln**

(30) Priorität: 10.11.1994 DE 4440033; 09.02.1995 DE 19504274
(71) Anmelder: SCHÄFER WERKE GmbH, D-57290 Neunkirchen (DE)
(72) Erfinder: Dasbach, Winfried, D-57537 Wissen (DE); Weller, Wolfgang, Dipl.-Ing., D-57548 Kirchen (DE)
(74) Vertreter: Müller, Gerd

(57) **Zusammenfassung**

Bei einem Verfahren zum Beschriften von bzw. Aufbringen eines Logos auf Kunststoffartikeln, insbesondere von durch einen Schäumvorgang in einer zweiteiligen, innen mit einem Trennmittel eingesprühten Form hergestellten Artikeln, deren äußere Schicht aus einem PU-(Polyurethan)Kunststoff besteht, mit bzw. aus einem Lack, wird die Sichtseite einer ein Label bildenden Trägerfolie mit einer Beschriftung bzw. einem Logo aus Lack versehen und vor dem Formvorgang mit der der Beschriftung entgegengesetzten Seite auf der Formoberfläche anliegend in zumindest eine der Formhälften eingelegt sowie nach dem Formvorgang die Trägerfolie von dem Kunststoffartikel abgezogen.

## Beschreibung

Die Erfindung betrifft ein Verfahren zum Beschriften von bzw. Aufbringen eines Logos auf Kunststoffartikeln, insbesondere von durch einen Schäumvorgang in einer zweiteiligen, innen mit einem Trennmittel eingesprühten Form hergestellten Artikeln, deren äußere Schicht aus einem PU-(Polyurethan)Kunststoff besteht, mit bzw. aus einem Lack.

Das Herstellen von Hohlkörpern, beispielsweise Fässern oder sonstigen Flüssigkeitsbehältern, die innen eine Edelstahlblase und außen eine Ummantelung aus Polyurethan besitzen, ist bekannt. Um solche Kunststoffartikel mit einer Beschriftung (Verbraucherhinweise, Inhaltsangaben, Schutzrechtshinweise, Warenzeichen, etc.) oder einem Logo beliebiger Art zu versehen, werden vor dem Schäumvorgang die Innenflächen der beiden Formhälften der geöffneten Schäumform mit einem das Herauslösen des fertigen Artikeln gewährleistenden Trennmittel eingesprüht. Danach wird jeweils in die Formhälften mindestens eine das Logo bzw. die Beschriftung enthaltende Schablone eingesetzt und Farbe auf den von der Schablone überdeckten Bereich der Forminnenwand gespritzt. Sofern eine Mehrfarbigkeit gewünscht ist, erfordert das für jede Farbe eine separate Schablone, die übereinandergelegt werden. Aufgrund des damit verbundenen großen Aufwandes wird die Mehrfarbigkeit daher auf zwei Farben beschränkt.

Nach dem Herausnehmen der Schablonen aus der Schäumform wird darin beispielsweise eine Edelstahlblase fixiert und eingespannt, worauf die noch geöffnete bzw. aufgeklappte Schäumform geschlossen werden kann. In die geschlossene Form lassen sich sodann die Komponenten (Polyol und Isocyanat) des PU-Schaumes einschießen, die über einen Zeitraum von wenigen Minuten miteinander reagieren. Mit dem Ende des Schäumvorgangs läßt sich der fertige Artikel aus der geöffneten Form entnehmen; die zuvor auf die Forminnenwand gespritzte Farbe haftet auf dem PU-Mantel des fertigen Artikels. Abgesehen von dem großen Aufwand bei mehrfarbigen Markierungen lassen sich bei dieser Art des Aufbringens von Beschriftungen Schattierungen nicht vermeiden und außerdem sind die das Logo bzw. die Beschriftung in der Schablone begrenzenden Stege sichtbar.

Weiterhin zählt es zum Stand der Technik, ein- oder mehrschichtige Kunststoffartikel durch Spritzgießen herzustellen. So sind beispielsweise durch die DE 23 42 794 C3 Mehrschichtformteile aus thermoplastischem Kunststoff bekanntgeworden, die einen geschäumten Kern und eine ungeschäumte Außenhaut aufweisen. Es wird dort zuerst ein Teil des ungeschäumten Kunststoffes und anschließend ein ein Treibmittel enthaltender Kunststoff gleichzeitig mit weiterem ungeschäumten Kunststoff über eine zentrale Düse und eine diese umgebende Ringdüse in eine Form bzw. ein zweiteiliges Formwerkzeug eingespritzt, und zwar der ungeschäumte Kunststoff durch die zentrale Düse und der ein Treibmittel enthaltende Kunststoff durch die Ringdüse. Formteile aus treibmittelhaltigem Kunststoff haben gegenüber Formteilen aus kompaktem Kunststoff den Vorteil, daß sie sich einerseits wanddickenunabhängig fertigen lassen und andererseits wesentlich leichter sind, was ohne Nachteil für die Festigkeit eine Materialersparnis mit sich bringt. Um Beschriftungen oder dekorative Effekte aus einem Lack an diesen spritzgegossenen Kunststoffartikeln anzubringen, ist ein separater Arbeitsgang erforderlich.

Um ein bedrucktes Label (Materialzuschnitt), z .B. ein Etikett, auf mindestens den Seitenwänden eines im Tiefziehverfahren in einer Thermoformmaschine hergestellten Kunststoffbehälters aufzubringen, ist es durch die DE 41 24 994 A1 bekanntgeworden, in die Form ein wenigstens die Seitenwände des Kunststoffgefäßes bedeckendes Etikett aus einem Kunststoff einzulegen, der eine innige Verbindung mit der Außenseite des Gefäßes eingeht. Der zum Ausbilden des Behälters benötigte Kunststoff liegt dort als Folie vor; er wird von einer Rolle abgezogen und einer Vorheizstation zugeführt. Danach läuft die Kunststoff-Folie in die eigentliche Tiefzieheinrichtung ein, die mehrere Tiefziehmulden aufweist, in welche die Etiketten bzw. Materialzuschnitte vor dem Tiefziehen der Kunststoff-Folie mittels einer Einlegevorrichtung eingelegt werden. Diese besteht im wesentlichen aus einem Drehkreuz mit mehreren in einer Vertikalebene liegenden Armen, das in Längsrichtung verfahrbar angeordnet ist. In Querrichtung des Drehkreuzes sind entsprechend der Anzahl von Formnestern des Werkzeug es der Thermoformmaschine mehrere solcher Arme angeordnet. Mit dem Drehkreuz arbeitet ein ein oder zwei höhenverstellbare Sauger tragender Querträger zusammen, wobei die Sauger die Etiketten bzw. Label aus zwei parallelen, übereinander angeordneten Magazinen abnehmen und den Armen des Drehkreuzes zuführen.

Der Erfindung liegt die Aufgabe zugrunde, ein Verfahren der eingangs genannten Art zu schaffen, insbesondere zum Beschriften bzw. Aufbringen eines Logos auf den PU-Mantel eines durch einen Schäumvorgang hergestellten Kunststoffartikels, mit dem sich die vorgenannten Nachteile und separate Arbeitsgänge bei der Artikelherstellung vermeiden lassen.

Diese Aufgabe wird erfindungsgemäß dadurch gelöst, daß eine die Sichtseite einer ein Label bildenden Trägerfolie mit einer Beschriftung bzw. einem Logo aus Lack versehen und vor dem Formvorgang mit der der Beschriftung entgegengesetzten Seite auf der Formoberfläche anliegend in zumindest eine der Formhälften eingelegt wird sowie nach dem Formvorgang die Trägerfolie von dem Kunststoffartikel abgezogen wird. Es braucht somit lediglich die zuvor vorzugsweise durch ein Siebdruckverfahren mit der Beschriftung bzw. dem Logo versehene Trägerfolie in die Formhälfte oder Formhälften dort eingelegt und fixiert - hierzu läßt sich andersseitig zum Logo auf die Trägerfolie gegebenenfalls außerdem eine Fixierhilfe aufdrucken - zu werden, um am fertigen Kunststoffartikel die Beschriftung bzw. das Logo bei Serienfertigung immer an die gleiche Stelle zu bekommen.

Der Erfindung liegt hierbei die durch zahlreiche Versuche belegte Erkenntnis zugrunde, daß ein rückstandsloses Abziehen der Trägerfolie mit der Fixierhilfe vor allem dann möglich ist, wenn der Kunststoffartikel bzw. bei einem Mehrschichtkörper zumindest dessen Außenschicht aus einem Material besteht, dessen Klebekraft höher als die der Trägerfolie ist. Das ist besonders bei Kunststoffartikeln der Fall, die aus PU-Kunststoff bestehen oder eine Ummantelung aus einem PU-Kunststoff besitzen. Das Einlegen der Trägerfolie bzw. des Labels kann von Hand, alternativ mit Saugern oder einem Elektrostatik-Gerät erfolgen.

Eine vorteilhafte Ausgestaltung der Erfindung sieht vor, daß eine aus Polypropylen bestehende Trägerfolie mit dem Lackdruck versehen wird. Wie sich gezeigt hat, ergeben sich bei einer PP-Trägerfolie beste Ergebnisse hinsichtlich der Elektrostatik, die im Zusammenspiel mit der Adhäsion entscheidend für die sichere Haftung des Labels in der Form ist. Das Übertragen der Beschriftung bzw. des Logos auf den Kunststoffartikel während des Schäum- oder Spritzvorgangs erfordert keinen Kleber, denn nach dem Schäumen oder Spritzen haftet der Lackaufdruck dauerhaft an der Außenfläche des Kunststoffartikels. Es bedarf somit keines Aufklebens bzw. innigen Verbindens von Etiketten mit dem Kunststoffartikel, um die gewünschten Sichtvermerke auf dem fertigen Artikel anzubringen. Weiterhin bereitet es keine Probleme, mehrfarbige Beschriftungen bzw. Logos anzubringen, da der Lack vorab durch Siebdrucken auf die Trägerfolie aufgetragen wird; eine Vier-Farben-Druck-Qualität konnte somit ohne weiteres erreicht werden.

## Patentansprüche

1. Verfahren zum Beschriften von bzw. Aufbringen eines Logos auf Kunststoffartikeln, insbesondere von durch einen Schäumvorgang in einer zweiteiligen, innen mit einem Trennmittel eingesprühten Form hergestellten Artikeln, deren äußere Schicht aus einem PU-(Polyurethan)Kunststoff besteht, mit bzw. aus einem Lack,
**dadurch gekennzeichnet,**
daß eine die Sichtseite einer ein Label bildenden Trägerfolie mit einer Beschriftung bzw. einem Logo aus Lack versehen und vor dem Formvorgang mit der der Beschriftung entgegengesetzten Seite auf der Formoberfläche anliegend in zumindest eine der Formhälften eingelegt wird sowie nach dem Formvorgang die Trägerfolie von dem Kunststoffartikel abgezogen wird.

2. Verfahren nach Anspruch 1,
**dadurch gekennzeichnet**,
daß der Lack auf die Trägerfolie aufgedruckt wird.

3. Verfahren nach Anspruch 2,
**dadurch gekennzeichnet**,
daß eine aus Polypropylen bestehende Trägerfolie mit dem Lackdruck versehen wird.

4. Verfahren nach einem der Ansprüche 1 bis 3,
**dadurch gekennzeichnet**,
daß die Haftung des Labels in der Form durch elektrostatische Aufladung verstärkt wird.
